# EUROPÄISCHE PATENTSCHRIFT

(11) **EP 2 656 414 B1**
(45) Veröffentlichungstag und Bekanntmachung des Hinweises auf die Patenterteilung: **03.06.2015**
(21) Anmeldenummer: 11808588.5
(22) Anmeldetag: 19.12.2011
(51) Int. Cl.: H01M 2/02, H01M 2/10, B65D 85/00, B65D 65/40

(54) **Elektrochemischer Energiespeicher und Verfahren zu dessen Herstellung**
Electrochemical energy storage device and process of manufacturing the same
Accumulateur d'energie électrochemique et procédé de fabrication de celui-ci

(30) Priorität: 21.12.2010 DE 102010055401
(43) Veröffentlichungstag der Anmeldung: 30.10.2013
(73) Patentinhaber: Li-Tec Battery GmbH, 01917 Kamenz (DE)
(72) Erfinder: SCHNEIDER, Heidi, 09603 Großschirma / OT Siebenlehn (DE); TRINCZEK, Andreas, 02997 Wittichenau (DE); STIEBERT, Iris, 01109 Dresden (DE); RIETSCHEL, Frank, 01896 Pulsnitz (DE); MIKUS, Holger, 01917 Kamenz (DE)
(74) Vertreter: Brückner, Ingo Andreas
(86) Internationale Anmeldenummer: PCT/EP2011/006413
(87) Internationale Veröffentlichungsnummer: WO 2012/084181

(56) Entgegenhaltungen:
- DE-A1- 2 324 254
- DE-A1- 3 639 681
- DE-A1-102008 061 011
- FR-A1- 2 680 132
- JP-A- 2000 040 520
- US-A- 5 143 215
- US-A1- 2003 186 122
- US-A1- 2010 233 520

## Beschreibung

Die vorliegende Erfindung betrifft einen elektrochemischen Energiespeicher, insbesondere von galvanische Zellen, ein Verfahren zur Herstellung eines elektrochemischen Energiespeichers

Es sind Batterien (Primärspeicher) und Akkumulatoren (Sekundärspeicher) zur Speicherung elektrischer Energie bekannt, die aus einer oder mehreren Speicherzellen aufgebaut sind, in denen bei Anlegen eines Ladestroms elektrische Energie in einer elektrochemischen Ladereaktion zwischen einer Kathode und einer Anode in bzw. zwischen einem Elektrolyten in chemische Energie umgewandelt und somit gespeichert wird und in denen bei Anlegen eines elektrischen Verbrauchers chemische Energie in einer elektrochemischen Entladereaktion in elektrische Energie umwandelt wird. Dabei werden Primärspeicher in der Regel nur ein Mal aufgeladen und sind nach Entladung zu entsorgen, während Sekundärspeicher mehrere (von einigen 100 bis über 10000) Zyklen von Aufladung und Entladung erlauben. Es ist dabei anzumerken, dass auch Akkumulatoren bisweilen als Batterien bezeichnet werden, wie etwa Fahrzeugbatterien, die bekanntlich häufige Ladezyklen erleben.

In den letzten Jahren gewinnen Primär- und Sekundärspeicher auf der Basis von Lithiumverbindungen an Bedeutung. Diese weisen eine hohe Energiedichte und thermische Stabilität auf, liefern eine konstante Spannung bei geringer Selbstentladung und sind frei von dem sogenannten Memory-Effekt.

Es ist bekannt, Energiespeicher und insbesondere Lithium-Batterien und -Akkumulatoren in der Form dünner Platten herzustellen. Bei solchen Zellen werden Kathoden- und Anodenmaterial, Elektroden und Separatoren in Form dünner Folien auf geeignete Weise aufeinandergelegt (gestapelt) und in eine Folienverpackung aus einem Verbundmaterial verpackt, wobei Stromableiter an einer Kante der Zelle seitlich hervorragen.

Elektrochemische Energiespeicher gemäß des Standes der Technik sind aus den Dokumenten DE 2324254 und US 2003/0186122 A1 bekannt.

Die Folienverpackung ist bei der Herstellung, beim Transport und beim Einbau des Energiespeichers in seine Anwendungsumgebung der Gefahr einer Beschädigung insbesondere durch Kratzer und Einstiche ausgesetzt, wodurch die Dichtigkeit der Folienverpackung des Energiespeichers beeinträchtigt werden kann.

Die vorliegenden Erfindung stellt sich daher die Aufgabe, diese Situation zu verbessern oder zu entschärfen. Diese Aufgabe wird durch ein Erzeugnis nach einem der unabhängigen Erzeugnisansprüche bzw. durch ein Verfahren nach einem der unabhängigen Verfahrensansprüche gelöst. Die Unteransprüche sollen vorteilhafte Weiterbildungen der Erfindung unter Schutz stellen.

Erfindungsgemäß ist eine Folie zum Schutz der Gehäuseoberfläche oder der Verpackungsoberfläche elektrochemischer Energiespeicher vor Beschädigungen vorgesehen, insbesondere während der Herstellung, beim Transport oder beim Verbau solcher elektrochemischen Energiespeicher. Die erfindungsgemäße Folie wird zur einfachen Unterscheidung von anderen Folien im Folgenden stellenweise auch als Schutzfolie bezeichnet.

In diesem Zusammenhang ist unter einer Folie ein dünner, vorzugsweise blattförmiger Gegenstand oder eine dünne Materialschicht, die vorzugsweise auf die Oberfläche eines Gegenstandes aufgebracht ist oder aufgebracht werden kann, zu verstehen. Bevorzugte Materialien sind dabei Metalle oder Kunststoffe. Vorzugsweise werden Folien zunächst in Endlosbahnen gefertigt, aufgerollt und später in passende Stücke geschnitten. Kunststofffolien bestehen vorzugsweise aus Polyolefinen wie Polyethylen hoher oder niedriger Dichte oder aus Polypropylen. Daneben eignen sich beispielsweise aber auch Polyvinylchlorid, Polystyrol, oder verschiedene Polyester sowie Polycarbonat zur Herstellung von Kunststoffolien. Die mechanische Belastbarkeit solcher Folien kann vorzugsweise durch ein Armieren mit Fasern, vorzugsweise mit Glasfasern oder durch die Einbringung eines Geflechtes erhöht werden. Ebenso erhöhen bestimmte Additive, vorzugsweise Polymere, die thermische Belastbarkeit solcher Folien.

Vorzugsweise ist diese Folie derart ausgestaltet ist, dass sie sich im Wesentlichen rückstandsfrei von der Gehäuseoberfläche oder von der Verpackungsoberfläche elektrochemischer Energiespeicher entfernen lässt. Eine Möglichkeit, dies zu erreichen, besteht darin, von einer Klebstoffbeschichtung der Folie abzusehen und die Haftung der Schutzfolie auf der Gehäuseoberfläche oder von der Verpackungsoberfläche des elektrochemischen Energiespeichers durch unmittelbare Adhäsion oder Kohäsion der Materialien bzw. des Materials zu bewirken. Es gibt aber auch Klebstoffe, die beim Entfernen der Schutzfolie von der Gehäuseoberfläche oder von der Verpackungsoberfläche des elektrochemischen Energiespeichers praktisch vollständig auf der Schutzfolie verbleiben. Die chemische und physikalische Zusammensetzung dieser Klebstoffe hängt von den zur Herstellung der Gehäuseoberflächen oder der Verpackungsoberflächen des elektrochemischen Energiespeichers verwendeten Materialien ab.

Erfindungsgemäß weist diese Folie eine Abziehlasche auf, mit deren Hilfe diese Folie leicht wieder von der Gehäuseoberfläche oder von der Verpackungsoberfläche des elektrochemischen Energiespeichers abgezogen werden kann. Diese Abziehlasche ist vorzugsweise nicht mit einem Klebstoff beschichtet, und zwar auch dann vorzugsweise nicht, wenn die Schutzfolie, deren Abziehen sie erleichtern soll, ganz oder teilweise mit einem Klebstoffbeschichtet ist. Im Falle des erfindungsgemäßen Energiespeichers hat die Oberfläche der Abziehlasche eine genoppte, gerippte, oder in anderer Weise die Reibung erhöhende Struktur, wodurch das Abziehen der Schutzfolie weiter erleichtert wird.

Vorzugsweise handelt es sich um eine mehrschichtige Folie, besonders vorzugsweise um ein laminiertes Konvolut aus einer Mehrzahl von Folien, die vorzugsweise aus unterschiedlichen Materialien bestehen oder unterschiedliche Materialien aufweisen. Vorzugsweise werden solche mehrschichtige Folien auch als Mehrschicht-Verbunde aus einer Kombination unterschiedlicher Kunststoffe hergestellt. Damit können bestimmte Eigenschaften, wie beispielsweise das Permeationsverhalten verbessert werden. Neben Kunststofffolien werden dabei vorzugsweise auch Metallfolien zu solchen Mehrschicht-Verbunden verarbeitet.

Erfindungsgemäß ist die Folie auf wenigstens einer Seite wenigstens teilweise mit einem Klebstoff beschichtet. Vorzugsweise weist dieser Klebstoff ein Polyacrylat und/oder ein Isocyanat auf oder enthält ein Polyacrylat und/oder ein Isoacrylat. Vorzugsweise ist die Folie auf wenigstens einer Seite wenigstens teilweise mit einer Acrylatdispersion, also einer Polyacrylate aufweisenden Dispersion beschichtet.

Im Falle des erfindungsgemäßen Energiespeichers haftet die Folie durch Adhäsion auf der Gehäuseoberfläche oder der Verpackungsoberfläche. Adhäsion (v. lat. adhaerere "anhaften"), auch Adhäsions- oder Anhangskraft genannt, ist der physikalische Zustand einer Grenzflächenschicht, die sich zwischen zwei in Kontakt tretenden kondensierten Phasen ausbildet - also zwischen Feststoffen und Flüssigkeiten mit vernachlässigbarem Dampfdruck. Die Haupteigenschaft dieses Zustandes ist der durch molekulare Wechselwirkungen in der Grenzflächenschicht hervorgerufene mechanische Zusammenhalt der beteiligten Phasen. Die diesen mechanischen Zusammenhalt bewirkenden Kräfte sind nicht alle vollständig erforscht, weshalb es verschiedene Adhäsionstheorien gibt (http://de.wikipedia.org/wiki/Adhäsion). Adhäsion umfasst die Haftkräfte an den Kontaktflächen zweier unterschiedlicher oder gleicher Stoffe durch Molekularkräfte. Die Stoffe können sich in festem oder in flüssigem Zustand befinden. Im Bereich der Klebstoffe versteht man unter Adhäsion die Haftung von Klebschichten an den Fügeteiloberflächen. Die Vorgänge bei der Adhäsion sind noch nicht vollständig aufgeklärt. Sie gestalten sich besonders schwierig, weil die Abhängigkeiten zwischen den Klebstoffsystemen und den verschiedenen Fügeteiloberflächen sehr komplex sind. Adhäsionsfolien haften ohne Klebstoff auf glatten/glänzenden Oberflächen mittels der Anziehungskraft der Moleküle zwischen beiden Materialien. Voraussetzung ist, dass sich die Moleküle so nahe wie möglich kommen, um eine Adhäsion zu erreichen.

Vorzugsweise verhält sich die Folie chemisch inert gegenüber denjenigen Teilen der Gehäuseoberfläche oder der Verpackungsoberfläche elektrochemischer Energiespeicher, mit denen sie Kontakt hat. Dies wird vorzugsweise dadurch erreicht, dass die Schutzfolie oder diejenige Schicht der Schutzfolie, die in Kontakt mit der Gehäuseoberfläche oder mit der Verpackungsoberfläche des elektrochemischen Energiespeichers kommt, aus dem selben oder aus einem chemisch ähnlichen Material besteht, wie die Gehäuseoberfläche oder die Verpackungsoberfläche des elektrochemischen Energiespeichers.

Erfindungsgemäß ist auch ein Verfahren zur Herstellung eines elektrochemischen Energiespeichers vorgesehen, welches die Merkmale des Anspruchs 1 umfasst.

Vorzugsweise ist ein Verfahren vorgesehen, bei dem die Folie faltenfrei und ohne Lufteinschlüsse aufgebracht wird.

Vorzugsweise ist ein Verfahren vorgesehen, bei dem die Folie bei der Produktion der Folie, beim Tiefziehen oder während nachfolgender Schritte der Herstellung des elektrochemischen Energiespeichers aufgebracht wird. In diesem Zusammenhang soll der Begriff des Tiefziehens auch das Thermoformen und ähnliche Fertigungsverfahren mit einschließen. Tiefziehen ist nach DIN 8584 das Zugdruckumformen eines Blechzuschnitts (auch Ronde, Folie, Platte, Tafel oder Platine genannt) in einen einseitig offenen Hohlkörper oder eines vorgezogenen Hohlkörpers in einen solchen mit geringerem Querschnitt ohne gewollte Veränderung der Blechdicke (http://de.wikipedia.org/wiki/Tiefziehen). Ein runder Zuschnitt wird auch Ronde genannt. Das Tiefziehen zählt zu den bedeutendsten Blechumformverfahren und wird sowohl in der Massenfertigung als auch in Kleinserien eingesetzt, wie beispielsweise in der Verpackungs- und Automobilindustrie sowie im Flugzeugbau.

Das Thermoformen ist ein Verfahren zur Umformung thermoplastischer Kunststoffe. Früher wurde es als Warmformen, Tiefziehen oder Vakuumtiefziehen bezeichnet (http:Ilde.wikipedia.org/wiki/Thermoformen). Man unterscheidet die Thermoformverfahren nach dem Halbzeug: Dünnere Halbzeuge werden Folien genannt, dickere (ab ca. 1,5 mm) Platten. Folien-Halbzeuge können auf großen (bis 0 1,8 m) Rollen den Thermoformautomaten zugeführt werden.

Vorzugsweise ist ein Verfahren vorgesehen, bei dem die Folie aufgeklebt, auflaminiert, beschichtet oder auf die Gehäuseoberfläche oder auf die Verpackungsoberfläche des elektrochemischen Energiespeichers aufgesprüht wird. Die Lamination (oder das Laminieren) bezeichnet das Verbinden einer dünnen, oftmals folienartigen Schicht mit einem Trägermaterial mittels eines Klebers (http://de.wikipedia.org/wiki/Laminieren).

Vorzugsweise ist ein Verfahren vorgesehen, bei dem eine mehrschichtige Folie vorzugsweise Schicht für Schicht auf die Gehäuseoberfläche oder auf die Verpackungsoberfläche des elektrochemischen Energiespeichers aufgebracht wird.

Erfindungsgemäß ist auch ein elektrochemischer Energiespeicher mit den in Anspruch 5 genannten Merkmalen vorgesehen.

Im Folgenden wird die Erfindung anhand bevorzugter Ausführungsbeispiele näher beschrieben. Merkmale dieser oder anderer Ausführungsbeispiele der Erfindung können mit Merkmalen weiterer Ausführungsbeispiele kombiniert werden, um so zu weiteren Ausführungsbeispielen der Erfindung zu gelangen.

Eine typische Elektroenergie-Speicherzelle gemäß der Erfindung ist ausgestattet mit einem aktiven Teil, der eingerichtet und angepasst ist, von außen zugeführte elektrische Energie zu speichern und gespeicherte elektrische Energie nach außen abzugeben. Sie weist ferner eine Umhüllung oder Folienverpackung auf aus einem Folienmaterial, welche den aktiven Teil vorzugsweise gas- und flüssigkeitsdicht umhüllt. Außerdem weist sie wenigstens zwei Stromabnehmer auf, die mit dem aktiven Teil verbunden sind und zur Zuführung elektrischen Stroms von außen an den aktiven Teil und zur Abgabe von dem aktiven Teil abgegebenen elektrischen Stroms nach außen eingerichtet und angepasst sind, wobei der von der Umhüllung umhüllte Teil ein vorzugsweise prismatisches Gebilde von im Wesentlichen quaderförmiger Gestalt beschreibt, dessen Ausdehnung in einer ersten Raumrichtung vorzugsweise wesentlich kleiner als die Ausdehnung in den beiden verbleibenden Raumrichtungen ist, sodass im Wesentlichen zwei einander gegenüberliegende, im Wesentliche parallele flächige Seiten sowie vier die beiden flächigen Seiten verbindende Schmalseiten definiert sind, und wobei der erste und der zweite Stromableiter vorzugsweise parallel zu den Ebenen der beiden flächigen Seiten in entgegengesetzten Richtungen von zwei einander gegenüberliegenden Schmalseiten aus von der Umhüllung abragen.

Die elektrochemisch aktiven Bestandteile elektrochemischer Energiespeicher werden vorzugsweise in eine Aluminium-Verbundfolie eingeschweißt, und zwar so, dass jeweilige verlängerte Abschnitte der Stromsammelfolien auf einer Seite durch die Schweißnaht hindurchtreten und als Anschlüsse bzw. Stromableiter nach außen hervorstehen. Diese werden vorzugsweise gemeinsam durch eine Schweißnaht der Verbundfolie hindurch nach außen geführt, oder es werden die Enden der Stromsammelfolien innerhalb der Folienverpackung zusammengefasst und durch Verbindungsmittel wie etwa Nieten, die senkrecht durch die Folienverpackung hindurch verlaufen, mit einem außen auf der Folienverpackung aufliegenden, stabförmigen Stromableiter verbunden.

Die Umhüllung des Energiespeichers weist vorzugsweise eine Folienverpackung, besonders vorzugsweise eine laminierten Folie oder ein laminiertes Konvolut von Folien auf, welche das Laminat aus Elektroden und Trennschichten gas- und flüssigkeitsdicht umhüllt. Insbesondere kann die Umhüllung eine erste Isolierschicht, eine Leiterschicht und eine zweite Isolierschicht aufweisen, wobei die Isolierschichten vorzugsweise aus einem Kunststoff en oder einen solchen Kunststoff aufweisen.

Die Leiterschicht besteht vorzugsweise aus Aluminium oder einer Aluminiumlegierung oder einem anderen Metall oder einer anderen Metall-Legierung, oder sie weist Aluminium oder eine Aluminiumlegierung oder ein anderes Metall oder eine andere Metall-Legierung auf. Auf diese Weise können verschiedene Funktionen und Eigenschaften der Umhüllung wie etwa Schweißbarkeit, mechanische Festigkeit elektrische und magnetische Abschirmung, Dichtigkeit gegen Flüssigkeiten, Dämpfe und Gase, insbesondere Wasser, Wasserdampf und Luft, von außen und Beständigkeit gegen Säuren und Elektrolyte von innen gleichermaßen bzw. gleichzeitig erfüllt werden.

Die Umhüllung ist vorzugsweise so ausgebildet, dass wenigstens eine Schweißnaht, vorzugsweise zwei sich entlang gegenüberliegender Schmalseiten erstreckende Schweißnähte, besonders bevorzugt auch eine sich über eine der beiden flächigen Seiten hinweg oder entlang einer dritten Schmalseite erstreckende Schweißnaht aufweist, oder dass sie zwei Teilfolien aufweist, die entlang der Schmalseiten miteinander verschweißt sind.

Eine Ausführungsform ist so ausgebildet, dass wenigstens einer der Stromableiter einen inneren Teil, der sich innerhalb der Umhüllung befindet, und einen äußeren Teil, der sich außerhalb der Umhüllung befindet, aufweist, wobei der innere Teil des Stromableiters mit dem aktiven Teil der Speicherzelle verbunden ist. Insbesondere kann der wenigstens eine Stromableiter durch eine Schweißnaht der Umhüllung hindurch geführt sein. Dieser Aufbau verwirklicht eine besonders glatte und flache Kontur der Zelle.

Alternativ kann wenigstens einer der Stromableiter auf der Außenseite der Umhüllung aufliegen und durch die Umhüllung hindurch mit dem aktiven Teil kontaktiert sein. Dieser Aufbau weist eine große Robustheit auf.

Die Erfindung eignet sich für alle Arten von Elektroenergie-Speicherzellen, bei welcher die Speicherung und Abgabe der elektrischen Energie durch jeweilige elektrochemische Reaktionen erfolgen. Eine besonders flache Ausführung des aktiven Teils, der im Wesentlichen die Dicke der Zelle bestimmt, wird durch einen laminierten Aufbau mit Folien chemisch aktiver Materialien, elektrisch leitender Materialien und Trennmaterialien in geeigneter Schichtung erzielt. So kann der aktive Teil eine Mehrzahl von Elektroden zweier Arten aufweisen, wobei jeweils eine Elektrode einer ersten Art durch eine Trennschicht von der Elektrode einer zweiten Art getrennt ist, wobei die Elektroden der ersten Art und die Elektroden der zweiten Art jeweils miteinander und mit einem der Stromableiter verbunden sind.

Die Folienverpackung weist vorzugsweise ine Mehrzahl, besonders vorzugsweise drei Schichten auf, die sowohl eine hinreichende mechanische Festigkeit als auch Beständigkeit gegen Elektrolytmaterial und eine gute elektrische und thermische Isolierung gewährleistet. So weist die Folienverpackung vorzugsweise eine innere Schicht aus einem Thermoplast wie Polyethylen oder Polypropylen, eine mittlere Schicht aus einem Metall wie etwa Aluminium und eine äußere Schicht aus einem Kunststoff wie Polyamid auf.

Bei der Herstellung der Energiespeicher wird vorzugsweise ein fertig laminierter Folienstapel mit Leiterfahnen der Anodenseite, die leitend mit einem ersten Stromableiter verbunden sind, und Leiterfahnen der Kathodenseite, die leitend mit einem zweiten Stromableiter verbunden sind, auf die zugeschnittene untere Folienverpackung gelegt. Im weiteren Verlauf der Herstellung wird anschließend die obere Folienverpackung aufgelegt, der Innenraum evakuiert und die Ränder der beiden Folienverpackungen verschweißt bzw. auf geeignete Weise gas- und flüssigkeitsdicht mit den Stromableitern verbunden. Geeignete Adhäsions- und Evakuierungsverfahren sind an sich bekannt und sind nicht Bestandteil der vorliegenden Erfindung.

## Patentansprüche

1. Verfahren zur Herstellung eines elektrochemischen Energiespeichers, bei dem wenigstens eine Folie, welche auf wenigstens einer Seite wenigstens teilweise mit einem Klebstoff beschichtet ist, und welche eine Abziehlasche aufweist, mit deren Hilfe die Folie leicht wieder von der Gehäuseoberfläche oder von der Verpackungsoberfläche des elektrochemischen Energiespeichers abgezogen werden kann, zum Schutz der Gehäuseoberfläche oder der Verpackungsoberfläche des elektrochemischen Energiespeichers vor Beschädigungen während der Herstellung des elektrochemischen Energiespeichers wenigstens teilweise auf die Gehäuseoberfläche oder auf die Verpackungsoberfläche des elektrochemischen Energiespeichers während der Herstellung des elektrochemischen Energiespeichers aufgebracht wird.

2. Verfahren nach Anspruch 1, bei dem die Folie faltenfrei und ohne Lufteinschlüsse aufgebracht wird.

3. Verfahren nach einem der vorhergehenden Ansprüche, **dadurch gekennzeichnet, dass** die Folie aufgeklebt, auflaminiert, beschichtet oder auf die Gehäuseoberfläche oder auf die Verpackungsoberfläche des elektrochemischen Energiespeichers aufgesprüht wird.

4. Verfahren nach einem der vorhergehenden Ansprüche, **dadurch gekennzeichnet, dass** eine mehrschichtige Folie vorzugsweise Schicht für Schicht auf die Gehäuseoberfläche oder auf die Verpackungsoberfläche des elektrochemischen Energiespeichers aufgebracht wird.

5. Elektrochemischer Energiespeicher mit einer Folie zum Schutz einer Gehäuseoberfläche oder einer Verpackungsoberfläche des elektrochemischen Energiespeichers vor Beschädigungen während der Herstellung, beim Transport oder beim Verbau solcher elektrochemischen Energiespeicher,
wobei die Folie auf wenigstens einer Seite wenigstens teilweise mit einem Klebstoff beschichtet ist,
wobei die Folie durch Adhäsion auf der Gehäuseoberfläche oder der Verpackungsoberfläche haftet,
wobei die Folie eine Abziehlasche aufweist,
**dadurch gekennzeichnet, dass** die Oberfläche der Abziehlasche eine genoppte, gerippte, oder in anderer Weise die Reibung erhöhende Struktur aufweist.

6. Elektrochemischer Energiespeicher nach Anspruch 5 mit einer Folie, die derart ausgestaltet ist, dass die Folie sich im Wesentlichen rückstandsfrei von der Gehäuseoberfläche oder von der Verpackungsoberfläche elektrochemischer Energiespeicher entfernen lässt.

7. Elektrochemischer Energiespeicher nach einem der vorhergehenden Ansprüche mit einer mehrschichtigen Folie.

8. Elektrochemischer Energiespeicher nach einem der vorhergehenden Ansprüche mit einer Folie die auf wenigstens einer Seite wenigstens teilweise mit einem Klebstoff beschichtet ist, der ein Polyacrylat und/oder ein Isocyanat aufweist oder enthält.

9. Elektrochemischer Energiespeicher nach einem der vorhergehenden Ansprüche mit einer Folie die sich chemisch inert gegenüber denjenigen Teilen der Gehäuseoberfläche oder der Verpackungsoberfläche elektrochemischer Energiespeicher verhält, mit denen sie Kontakt hat.

## Claims

1. A method for manufacturing an electrochemical energy storage device in which at least one film, which is at least partly coated on at least one side with an adhesive, and which comprises a peel tab with which the film can be easily peeled off again from the housing surface or from the packaging surface of the electrochemical energy storage device, is applied to at least part of the housing surface or packaging surface of the electrochemical energy storage device during the manufacturing of the electrochemical energy storage device to protect the housing surface or the packaging surface of the electrochemical energy storage device from damage during the manufacturing of said electrochemical energy storage device.

2. The method according to claim 1, in which the film is applied without creases and without air pockets.

3. The method according to one of the preceding claims, **characterized in that** the film is glued, laminated, coated or sprayed onto the housing surface or onto the packaging surface of the electrochemical energy storage device.

4. The method according to at least one of the preceding claims, **characterized in that** a multi-layer film is preferably deposited layer by layer on the housing surface or on the packaging surface of the electrochemical energy storage device.

5. An electrochemical energy storage device having a film to protect a housing surface or a packaging surface of the electrochemical energy storage device from damage during the manufacturing, transport or installation of such electrochemical energy storage devices, wherein the film is at least partly coated on at least one side with an adhesive,
wherein the film adheres to the housing surface or the packaging surface,
wherein the film comprises a peel tab,
**characterized in that** the surface of the peel tab exhibits a structure which is nubbed, ribbed or which in some other way increases friction.

6. The electrochemical energy storage device according to claim 5 having a film which is designed such that the film can essentially be removed from the housing surface or from the packaging surface of the electrochemical energy storage device without leaving any residue.

7. The electrochemical energy storage device according to at least one of the preceding claims having a multi-layer film.

8. The electrochemical energy storage device according to at least one of the preceding claims having a film which is at least partly coated on at least one side with an adhesive comprising or containing a polyacrylate and/or an isocyanate.

9. The electrochemical energy storage device according to at least one of the preceding claims having a film which is chemically inert relative to those parts of the housing surface or packaging surface of the electrochemical energy storage device which it contacts.

## Revendications

1. Procédé de fabrication d'un accumulateur d'énergie électrochimique, dans lequel
au moins une feuille, qui est revêtue au moins partiellement d'une colle sur un moins un côté, et qui présente une languette de détachement à l'aide de laquelle la feuille peut être aisément détachée de la surface du boîtier ou de la surface d'emballage de l'accumulateur d'énergie électrochimique, est appliquée au moins partiellement sur la surface du boîtier ou sur la surface d'emballage de l'accumulateur d'énergie électrochimique pendant la fabrication de l'accumulateur d'énergie électrochimique afin de protéger la surface du boîtier ou la surface d'emballage de l'accumulateur d'énergie électrochimique contre des endommagements pendant la fabrication de l'accumulateur d'énergie électrochimique.

2. Procédé selon la revendication 1, dans lequel la feuille est appliquée sans plis et sans inclusions d'air.

3. Procédé selon l'une des revendications précédentes, **caractérisé en ce que** la feuille est collée, laminée, revêtue ou est pulvérisée sur la surface du boîtier ou sur la surface d'emballage de l'accumulateur d'énergie électrochimique.

4. Procédé selon l'une des revendications précédentes, **caractérisé en ce qu'**une feuille multicouche est appliquée de préférence couche par couche sur la surface du boîtier ou sur la surface d'emballage de l'accumulateur d'énergie électrochimique.

5. Accumulateur d'énergie électrochimique avec une feuille destinée à protéger une surface du boîtier ou une surface d'emballage de l'accumulateur d'énergie électrochimique contre des endommagements pendant la fabrication, le transport ou l'aménagement de tels accumulateurs d'énergie électrochimique,
la feuille étant au moins partiellement revêtue d'une colle sur au moins un côté,
la feuille adhérant par adhérence sur la surface du boîtier ou sur la surface d'emballage,
la feuille présentant une languette de détachement,
**caractérisé en ce que** la surface de la languette de détachement présente une structure pastillée, nervurée ou augmentant la friction d'une autre façon.

6. Accumulateur d'énergie électrochimique selon la revendication 5, avec une feuille qui est constituée de telle sorte que la feuille peut être enlevée de la surface du boîtier ou de la surface d'emballage d'accumulateurs d'énergie électrochimique essentiellement sans laisser de résidus.

7. Accumulateur d'énergie électrochimique selon l'une des revendications précédentes, avec une feuille multicouche.

8. Accumulateur d'énergie électrochimique selon l'une des revendications précédentes, avec une feuille qui est, sur au moins un côté, revêtue au moins partiellement d'une colle qui présente ou contient un polyacrylate et/ou un isocyanate.

9. Accumulateur d'énergie électrochimique selon l'une des revendications précédentes, avec une feuille qui se comporte de façon chimiquement inerte vis-à-vis des parties de la surface du boîtier ou de la surface d'emballage d'accumulateurs d'énergie électrochimique avec lesquelles elle est en contact.
